# EUROPÄISCHE PATENTSCHRIFT

(11) **EP 0 396 924 B1**
(45) Veröffentlichungstag und Bekanntmachung des Hinweises auf die Patenterteilung: **06.07.1994**
(21) Anmeldenummer: 90106929.4
(22) Anmeldetag: 11.04.1990
(51) Int. Cl.: B41F 15/08, B41F 15/10

(54) **Einrichtung zum winkelsynchronen Antreiben einzelner Druckschablonen einer Rotationssiebdruckmaschine**
Device for the synchronized drive of several printing screens of a rotary screen printing machine
Dispositif pour la transmission synchronisée de plusieurs écrans d'une machine de sérigraphie rotative

(30) Priorität: 11.05.1989 DE 3915482
(43) Veröffentlichungstag der Anmeldung: 14.11.1990
(73) Patentinhaber: Stork MBK GmbH, 83085 Kiefersfelden (DE)
(72) Erfinder: Lintner, Alexander, A-6330 Kufstein (AT)
(74) Vertreter: TER MEER STEINMEISTER & PARTNER GbR

(56) Entgegenhaltungen:
- EP-A- 0 244 034

## Beschreibung

Die Erfindung betrifft eine Einrichtung zum winkelsynchronen Antreiben einzelner Druckschablonen einer Rotationssiebdruckmaschine.

Für die Produktion mehrfarbiger Muster, insbesondere Textilmuster, auf Maschinen der genannten Art ist es erforderlich, daß die zuvor in ihrer Winkellage exakt justierten Druckschablonen über die gesamte Dauer der Produktion diese Relativlage zueinander nicht verlieren. Dies hätte unweigerlich die Produktion von Ausschußmaterial zur Folge. Üblicherweise verwendet man zur Realisierung eines derartigen winkelsynchronen Antriebs eine Hauptantriebswelle mit mehreren aufeinanderfolgenden Winkelgetrieben, wodurch aufgrund des mechanischen Formschlusses der gesamten Anordnung ein Synchronlauf der einzelnen Schablonen gewährleistet ist. Des weiteren muß jedem Winkelgetriebe antriebsseitig ein Drehzahlüberlagerungsgetriebe nachgeschaltet werden, um mit einem Handrad oder einem externen Motor eine Einstellung bzw. eine Korrektur der Winkellage einzelner Druckschablonen vor und auch während der Produktion zu ermöglichen.

Ein derartiger winkelsynchroner Antrieb ist daher mechanisch sehr aufwendig und bringt ferner den Nachteil, daß man aufgrund der erforderlichen Hauptwelle und der daraus resultierenden starren Verbindung der einzelnen Getriebestufen nur schwer eine Höhenverstellung einzelner Druckaggregate vornehmen kann. Ebenso schwierig ist es, einzelne Druckschablonen zu stoppen, während die anderen winkelsynchron weiterdrehen.

Besonders zum Bedrucken teppichartiger Materialien wird ein beidseitiger Antrieb der Druckschablonen benötigt, wodurch sich der mechanische Aufwand weiter erhöht. Es wird hier die doppelte Anzahl von Winkelgetrieben und Überlagerungsgetrieben benötigt. Zur Verstellung der Winkellage muß jede Druckstation mit einer Verbindungswelle versehen werden, beim Einlegen der Druckschablonen muß zur Ausrichtung der Flucht das jeweils gegenüberliegende Getriebe mechanisch entkoppelt werden.

Zur Verbesserung wurde bereits vorgeschlagen (siehe z.B. EP-A-0 244 034) den Einzelantrieb der Druckschablonen mittels Servo-Motoren durchzuführen. Dadurch werden zwar die bereits erwähnten mechanischen Probleme beseitigt, jedoch ist die nun notwendige Elektronik sehr aufwendig. Da derartige Motoren analog angesteuert werden, ist es notwendig, deren Drehbewegung an der Welle mit einem Inkrementalgeber (Winkelkodierer) zu digitalisieren und wiederum in das Regelsystem zurückzuführen, um ein Aufaddieren minimaler Drehzahlabweichungen zu verhindern. Da der Servo-Motor im Stillstand über kein Haltemoment verfügt, ist ferner eine externe Haltebremse notwendig, damit durch äußere Krafteinwirkung (Hantieren an einzelnen Druckschablonen) keine Lageänderung verursacht werden kann.
Der Erfindung liegt die Aufgabe zugrunde, eine Einrichtung für den winkelsynchronen Einzelantrieb von Druckschablonen einer Rotationssiebdruckmaschine zu schaffen, die auf technisch einfache und zuverlässige Weise eine stets gleichbleibend genaue Winkellage der einzelnen Druckschablonen gewährleistet.

Diese Aufgabe wird erfindungsgemäß durch die kennzeichnenden Merkmale des Patentanspruchs 1 bzw. 6 gemäß zwei alternativen Vorschlägen gelöst.

Vorteilhafte Weiterbildungen des Erfindungsgedankens sind in den jeweils abhängigen Patentansprüchen angegeben.

Die erfindungsgemäße Vorrichtung weist Schrittmotoren auf, die durch einzelne Impulse oder Impulspakete direkt digital angesteuert werden. Durch eine bestimmte an sich bekannte Anordnung mehrerer Permanentmagnete ist es möglich, derartige Schrittmotoren auch für Antriebe (Dauerlauf) zu verwenden. Daraus ergeben sich folgende Vorteile:
- Bedingt durch die versetzte Anordnung einer großen Zahl von Permanentmagneten im Motorinneren ergibt sich für jede Motorumdrehung eine stets reproduzierbare Anzahl von Schritten, d. h., daß bereits von Anfang an feststeht, wieviel Einzelschritte einer ganzen Motorumdrehung zugeordnet werden können. Es ist somit physikalisch nicht möglich, daß sich bei der Ansteuerung mehrerer Schrittmotoren mit derselben Impulsfrequenz über einen beliebig langen Zeitraum (theoretisch unendlich) Abweichungen in der Winkellage zueinander ergeben. Dadurch erübrigt sich ein aufwendiges Rückführen der digitalisierten Wellenumdrehung ins System.
- Richtig dimensionierte Schrittmotorantriebe weisen über den gesamten Drehzahlbereich ein annähernd konstantes Drehmoment auf, das auch bei Drehzahl O vorhanden ist, d. h., die Motorwelle bleibt im Stillstand in ihrer Lage absolut fixiert. Die Verwendung von externen Bremsen kann daher entfallen.
- Da das Gesamtsystem ausschließlich auf digitaler Basis arbeitet, sind Störungen externer Natur von weitaus geringerem Einfluß.

Mehrere Ausführungsbeispiele der Erfindung sind in der Zeichnung dargestellt und werden im folgenden näher beschrieben. Es zeigen:
- **Fig. 1**: den prinzipiellen Systemaufbau der erfindungsgemäßen Einrichtung für den volldigitalen, winkelsynchronen Einzelantrieb von Druckschablonen einer Rotationssiebdruckmaschine gemäß eines ersten Ausführungsbeispiels, bei dem als Leitgröße die Bewegungsgeschwindigkeit eines Drucktuches dient;
- **Fig. 2**: eine Abwandlung des Systemaufbaus nach Fig. 1, bei der alle Antriebssignale direkt von einem Leitrechner vorgegeben werden und eine Nachregelung für einen Drucktuchantrieb in Abhängigkeit von der Synchrongeschwindigkeit oder -phase der Druckschablonen möglich ist; und
- **Fig.3**: eine Abwandlung des Systemaufbaus nach Fig. 1 oder Fig. 2, bei der jeder Sub-Rechner jeweils zwei Stellmotoren über zugeordnete Leistungstreiber ansteuert zum zweiseitigen Antrieb der Druckschablonen.

Einander entsprechende Bauteile sind in den Figuren mit den gleichen Bezugszahlen versehen.

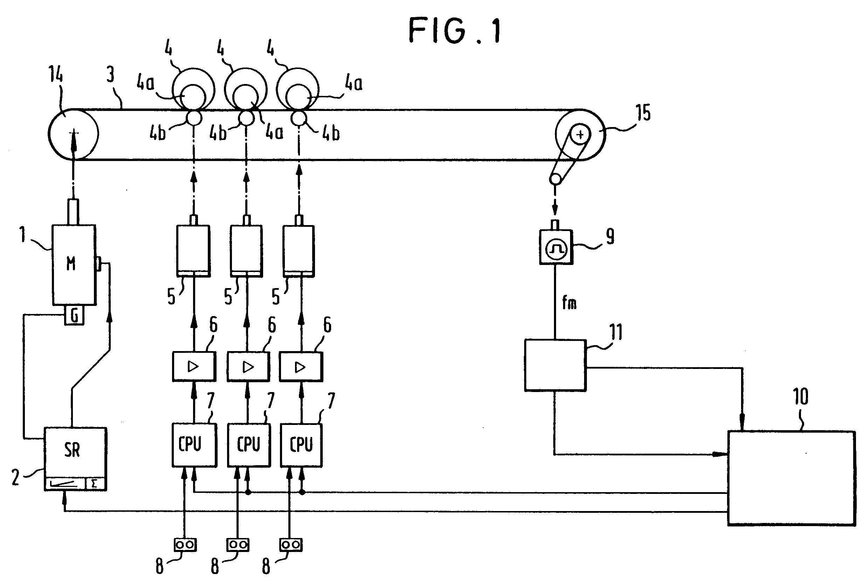

Die Fig. 1 zeigt in vereinfachter Form eine Rotationssiebdruckmaschine mit einer Antriebswalze 14 und einer Spannrolle 15 für ein umlaufendes Drucktuch 3. Ferner sind drei Druckaggregate dargestellt, die in bekannter Weise nur schematisch angedeutete Druckschablonen 4 (4a bezeichnet die Druckschablonen mit den geringsten Durchmessern), und unterhalb des Drucktuchs 3 gelagerte Schablonenantriebsritzel 4b aufweisen. Der Antrieb des Drucktuchs 3 erfolgt über die Antriebswalze 14 mittels eines Gleichstrommotors 1, der von einem über einen Leitrechner 10 analog angesteuerten Stromrichter 2 geregelt wird.

Die erfindungsgemäße Einrichtung mit Einzelantrieb der Druckschablonen weist einen der Spannwalze 15 zugeordneten Impulsgenerator 9 auf, der ein der Bewegungsgeschwindigkeit des Drucktuchs 3 entsprechendes Digitalsignal fₘ erzeugt. Ein dem Impulsgenerator 9 nachgeschalteter Frequenzteiler 11 untersetzt das Digitalsignal fₘ mit einem vom Leitrechner 10 bestimmbaren Teilungsverhältnis und führt die entsprechenden Digitalsignale dem Leitrechner 10 zu. Diese Digitalsignale werden im Leitrechner 10 zu digitalen Steuersignalen verarbeitet, die einer Anzahl von Druckschablonen 4 entsprechenden Anzahl von Sub-Rechnern (CPU) 7 parallel zugeführt werden. In den Sub-Rechnern 7 werden die digitalen Steuersignale an die Erfordernisse der Schrittmotoren 5 hinsichtlich deren Polzahl, Drehwinkelelemente und/oder Leistungsanforderungen angepaßt. Die Ausgangssignale der Sub-Rechner 7 werden über jedem Sub-Rechner 7 nachgeschaltete Leistungstreiber 6 den jeweiligen Schrittmotoren 5 eingegeben, die dadurch die Druckschablonen 4 mit zueinander exakt konstanter Winkellage (Phasenlage) antreiben. Obwohl in Fig. 1 Antriebseinheiten für nur drei Druckschablonen 4 dargestellt sind, ist es offensichtlich, daß eine beliebige Anzahl von Druckschablonen 4 auf diese Weise angetrieben werden kann.

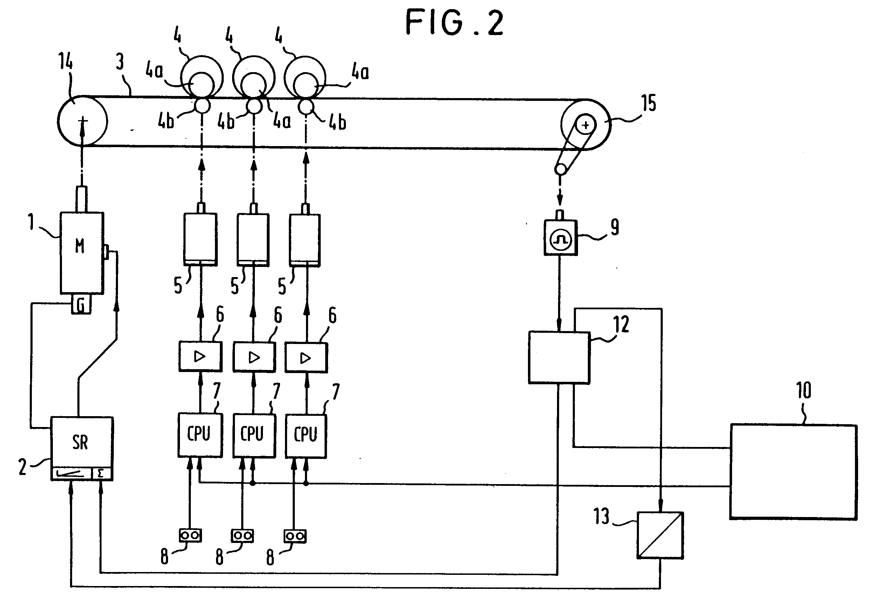

Das in Fig. 2 dargestellte Ausführungsbeispiel unterscheidet sich von dem ersten Ausführungsbeispiel dadurch, daß das den Sub-Rechnern 7 parallel zugeführte Steuersignal für die Schrittmotoren 5 direkt vom Leitrechner 10 erzeugt wird. Dieses Steuersignal wird neben den Sub-Rechnern 7 auch noch einem Differenzzähler 12 mit Analogausgang sowie einem Digital/Analogwandler 13 eingegeben. Der Digital/Analogwandler 13 erzeugt eine dem Steuersignal entsprechende lineare Sollwertspannung zur Ansteuerung des Stromrichters 2 zur Drehzahlvorgabe des Gleichstrommotors 1, während der Differenzzähler 12 das aus dem Leitrechner 10 zugeführte Steuersignal für die Schrittmotoren 5 mit dem, wie in Fig. 1 vom Impulsgenerator 9 erzeugten Digitalsignal vergleicht und eine eventuell auftretende Differenz in eine entsprechende Spannung umwandelt, die an einem Drehzahlüberlagerungseingang des Stromrichters 2 anliegt zur Drehzahlkorrektur des Gleichstrommotors 1.

Bei beiden Ausführungsbeispielen ist es möglich, über Handtaster 8 jeweils den einzelnen Sub-Rechnern 7 Befehle zur Verstellung der jeweiligen Winkelposition um einzelne Winkelinkremente und/oder zum Beschleunigen oder Bremsen einzelner Druckschablonen 4 zu geben. Dies ermöglicht ein Einstellen der Druckschablonenlage vor oder auch während der Produktion ohne Verwendung weiterer Getriebe. Diese Einstellung ist aufgrund eines speziell dafür entwickelten Assemblerprogramms möglich, das hierfür Pakete von mehreren tausend Impulsen zusammenfaßt und diese um den erforderlichen oder gewünschten Betrag erhöht oder reduziert. Dadurch ist das sonst vorhandene Drehzahlüberlagerungsgetriebe ebenfalls überflüssig.

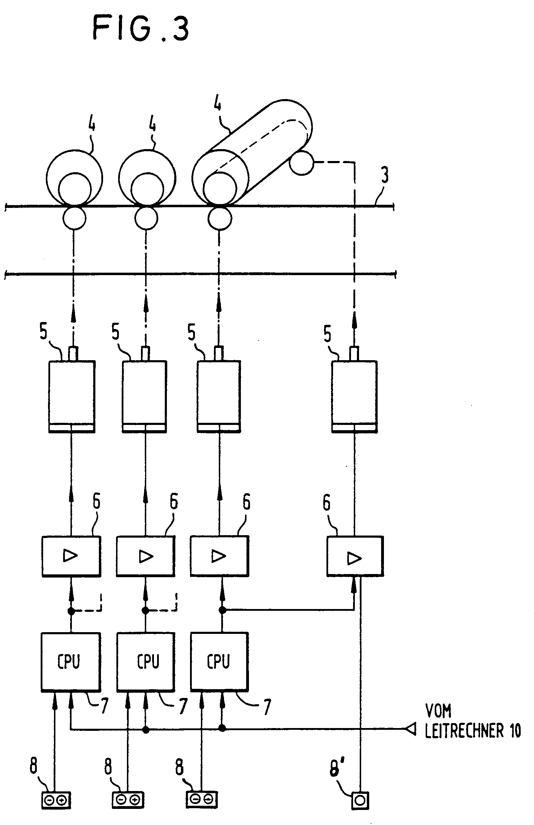

Bei einer besonders zum Bedrucken teppichartiger Materialien geeigneten dritten Ausführungsform bleibt der in Fig. 1 bzw. Fig. 2 dargestellte Systemaufbau weitgehend unverändert bis auf die Verwendung von zwei Stellmotoren (5) für jede Druckschablone (4). Wie in Fig. 3 gezeigt, steuert jeder Sub-Rechner (7) jeweils zwei Stellmotoren (5) über zugeordnete Leistungstreiber (6) an. Um beim Einlegen der Druckschablonen (4) ein selbständiges Ausrichten der Flucht zu ermöglichen, ist es notwendig, einen der beiden Stellmotoren (5) stromlos zu machen. Dies ist durch Betätigen eines mit einem Leistungstreiber (6) verbundenen Handtasters 8' erreichbar.

Alle drei Ausführungsbeispiele der Einrichtung für den volldigitalen, winkelsynchronen Einzelantrieb der Druckschablonen unterscheiden sich nicht in der Synchronisation der einzelnen Druckschablonen 4, sondern durch Verwendung unterschiedlicher Leitgrößen für das Gesamtsystem. Bei der Einrichtung gemäß Fig. 1 ist die in ein Digitalsignal umgewandelte Bewegungsgeschwindigkeit des Drucktuchs und damit der Drucktuchantrieb die Leitgröße zur Steuerung der Schrittmotoren, während bei der Einrichtung gemäß Fig. 2 der Drucktuchantrieb über den Differenzzähler mittels Impulsvergleich der angetriebenen Druckschablonen entsprechend nachgeregelt wird.

## Patentansprüche

1. Einrichtung für den winkelsynchronen Einzelantrieb von Druckschablonen (4) einer Rotationssiebdruckmaschine, **gekennzeichnet durch**:
- einen Impulsgenerator (9) zur Erzeugung eines Digitalsignals (fₘ), das der Bewegungsgeschwindigkeit eines Drucktuchs (3) der Rotationssiebdruckmaschine entspricht, und
- einen Leitrechner (10), der unter Vorgabe durch das Digitalsignal (fₘ) ein digitales Steuersignal für den auf die Drucktuchgeschwindigkeit synchronisierten Gleichlaufantrieb der Druckschablonen (4) durch diesen individuell zugeordnete Schrittmotoren (5) liefert.

2. Einrichtung nach Anspruch 1, **gekennzeichnet durch** einen zwischen den Impulsgenerator (9) und den Leitrechner (10) geschalteten Frequenzteiler (11), der das Digitalsignal (fₘ) untersetzt und dessen Teilungsverhältnis vom Leitrechner (10) zur Nachstellung des Synchronantriebs veränderbar ist.

3. Einrichtung nach Anspruch 1 oder 2, **gekennzeichnet durch** mehrere Sub-Rechner (7), die jeweils einem Leistungstreiber (6) vorgeschaltet sind zur individuellen Anpassung des digitalen Steuersignals an die einzelnen Schrittmotorantriebe.

4. Einrichtung nach Anspruch 3, **gekennzeichnet durch** Handtaster (8), über die den Sub-Rechnern (7) Befehle zur Drehphasen- oder Drehwinkelinkrementkorrektur und/oder zum Beschleunigen oder Bremsen einzelner Druckschablonen (4) eingebbar sind.

5. Einrichtung nach einem der Ansprüche 1 bis 4, **gekennzeichnet durch** einen Gleichstrommotor (1) für den Drucktuchantrieb, der über einen vom Leitrechner (10) angesteuerten Stromrichter (2) regelbar ist.

6. Einrichtung für den winkelsynchronen Einzelantrieb von Druckschablonen (4) einer Rotationssiebdruckmaschine, **gekennzeichnet durch**:
- einen Leitrechner (10) zur Vorgabe eines digitalen Steuersignals,
- mehrere parallel geschaltete Schrittmotoren (5) als Einzelantriebe für die Druckschablonen (4), an denen das jeweils über einen Sub-Rechner (7) und einen Leistungstreiber (6) geführte digitale Steuersignal anliegt, für den Synchronantrieb der Druckschablonen (4).
- einen Digital/Analogwandler (13) zur Umwandlung des digitalen Steuersignals in eine lineare Sollwertspannung zur Drehzahlvorgabe für einen auf die Drehzahl der Druckschablonen (4) synchronisierten Drucktuchantrieb der Rotationssiebdruckmaschine,
- einen Impulsgenerator (9) zur Erzeugung eines der Bewegungsgeschwindigkeit des Drucktuchs (3) entsprechenden Digitalsignals (fₘ) und
- einen Differenzzähler (12) zum Vergleichen des Digitalsignals (fₘ) mit dem digitalen Steuersignal und zum Umwandeln einer daraus erhaltenen Differenz in eine entsprechende, die Drehzahlvorgabe des Drucktuchantriebs korrigierende Spannung.

7. Einrichtung nach Anspruch 6, **gekennzeichnet durch** Handtaster (8), über die den Sub-Rechnern (7) Befehle zur Drehphasen- oder Drehwinkelinkrementkorrektur und/oder zum Beschleunigen oder Bremsen einzelner Druckschablonen (4) eingebbar sind.

8. Einrichtung nach Anspruch 6 oder 7, **gekennzeichnet durch** einen Gleichstrommotor (1) für den Drucktuchantrieb, der über einen Stromrichter (2) in Abhängigkeit von den Ausgangssignalen des Differenzzählers (12) und des Digital/Analogwandlers (13) regelbar ist.

9. Einrichtung nach einem der Ansprüche 1 bis 8, **dadurch gekennzeichnet**, daß
- jedem Sub-Rechner (7) jeweils zwei über zugeordnete Leistungstreiber (6) ansteuerbare Stellmotoren (5) nachgeschaltet sind zum beidseitigen Einzelantrieb der Druckschablonen (4) und daß
- jeweils einer der beiden Stellmotoren (5) jeder Druckschablone (4) zur wahlweisen Unterbrechung der Stromzufuhr mit einem Handtaster (8') verbunden ist.

## Claims

1. Device for the synchronized individual drive of printing screens (4) of a rotary screen printing machine, characterized by:
- a pulse generator (9) for generating a digital signal (fₘ) which corresponds to the speed of movement of a printing cloth (3) of the rotary screen printing machine, and
- a master computer (10) which, predetermined by the digital signal (fₘ), provides a digital control signal for the synchronized drive of the printing screens (4), which drive is synchronized with the speed of the printing cloth, by means of stepping motors (5) assigned individually to said printing screens.

2. Device according to Claim 1, characterized by a frequency divider (11) which is connected between the pulse generator (9) and the master computer (10), reduces the digital signal (fₘ), and whose division ratio can be changed by the master computer (10) for readjusting the synchronous drive.

3. Device according to Claim 1 or 2, characterized by a plurality of subordinate computers (7) which are connected in each case upstream of a power driver (6) for the individual adaptation of the digital control signal to the individual stepping motor drives.

4. Device according to Claim 3, characterized by manual keys (8) via which commands can be entered into the subordinate computers (7) for correcting the rotary phase or rotary angle increment and/or for accelerating or decelerating individual printing screens (4).

5. Device according to one of Claims 1 to 4, characterized by a direct current motor (1) for the printing cloth drive which can be controlled via a power converter (2) which is driven by the master computer (10).

6. Device for the synchronized individual drive of printing screens (4) of a rotary screen printing machine, characterized by:
- a master computer (10) for predetermining a digital control signal,
- a plurality of stepping motors (5), connected in parallel, as individual drives for the printing screens (4) at which the digital control signal, fed in each case via a subordinate computer (7) and a power driver (6), is present for the synchronous drive of the printing screens (4),
- a digital-to-analog converter (13) for converting the digital control signal to a linear reference value voltage for predetermining speed for a printing cloth drive of the rotary screen printing machine, which drive is synchronized with the speed of the printing screens (4),
- a pulse generator (9) for generating a digital signal (fₘ) corresponding to the speed of movement of the printing cloth (3), and
- a difference counter (12) for comparing the digital signal (fₘ) with the digital control signal and for converting a difference obtained therefrom to a corresponding voltage which corrects the predetermined speed of the printing cloth drive.

7. Device according to Claim 6, characterized by manual keys (8) via which commands can be entered into the subordinate computers (7) for correcting the rotary phase or rotary angle increment and/or for accelerating or decelerating individual printing screens (4).

8. Device according to Claim 6 or 7, characterized by a direct current motor (1) for the printing cloth drive which can be controlled via a power converter (2) in dependence on the output signals of the difference counter (12) and of the digital-to-analog converter (13).

9. Device according to one of Claims 1 to 8, characterized in that
- two adjusting motors (5), which can be driven via associated power drivers (6), are connected in each case downstream of each subordinate computer (7) for the two-sided individual drive of the printing screens (4), and in that
- in each case one of the two adjusting motors (5) of each printing screen (4) is connected to a manual key (8') for the selective interruption of the current supply.

## Revendications

1. Dispositif pour l'entraînement individuel d'écrans (4) d'une machine de sérigraphie rotative, avec synchronisation des positions angulaires caractérisé en ce qu'il comprend
- un générateur d'impulsions (9) pour la production d'un signal numérique (fₘ) qui correspond à la vitesse de mouvement d'un tissu d'impression (3) de la machine de sérigraphie rotative, et
- un ordinateur pilote (10) qui, en fonction du signal numérique (fₘ), fournit un signal de commande numérique pour l'entraînement des écrans (4) synchronisé avec la vitesse du tissu d'impression par des moteurs pas à pas (5) associés individuellement auxdits écrans.

2. Dispositif selon la revendication 1, caractérisé en ce qu'il comprend un diviseur de fréquence (11) intercalé entre le générateur d'impulsions (9) et l'ordinateur pilote (10), qui réduit le signal numérique (fₘ) et dont le rapport de division peut être modifié par l'ordinateur pilote (10) pour le rajustement de l'entraînement synchrone.

3. Dispositif selon l'une des revendications 1 ou 2, caractérisé en ce qu'il comprend plusieurs ordinateurs subordonnés (7) dont chacun est monté en amont d'un circuit d'attaque de puissance (6) pour l'adaptation individuelle du signal de commande numérique aux différents systèmes pas à pas.

4. Dispositif selon la revendication 3, caractérisé en ce qu'il comprend des manipulateurs (8) qui permettent d'envoyer aux ordinateurs subordonnés (7) des instructions pour la correction incrémentielle de la phase ou de l'angle de rotation et/ou pour l'accélération ou le freinage de différents écrans (4).

5. Dispositif selon l'une des revendications 1 à 4, caractérisé en ce qu'il comprend un moteur à courant continu (1) pour l'entraînement du tissu d'impression, qui peut être réglé par l'intermédiaire d'un convertisseur (2) commandé par l'intermédiaire de l'ordinateur pilote (10).

6. Dispositif pour l'entraînement individuel d'écrans (4) d'une machine de sérigraphie rotative, avec synchronisation des positions angulaires, caractérisé en ce qu'il comprend
- un ordinateur pilote (10) pour la prédétermination d'un signal de commande numérique,
- plusieurs moteurs pas à pas (5) montés en parallèle servant d'entraînements individuels pour les écrans (4), auxquels est appliqué le signal de commande numérique transmis respectivement par un ordinateur subordonné (7) et un circuit d'attaque de puissance (6), pour l'entraînement synchronisé des écrans (4),
- un convertisseur numérique/analogique (13) pour la conversion du signal de commande numérique en une tension de consigne linéaire pour la prédétermination de la vitesse de rotation en vue d'un entraînement du tissu d'impression de la machine de sérigraphie rotative synchronisé avec la vitesse de rotation des écrans (4),
- un générateur d'impulsions (9) pour la production d'un signal numérique (fₘ) qui correspond à la vitesse de mouvement du tissu d'impression (3), et
- un compteur différentiel (12) pour la comparaison du signal numérique (fₘ) avec le signal de commande numérique et pour la conversion d'une différence ainsi obtenue en une tension correspondante qui corrige la vitesse de rotation prédéterminée de l'entraînement du tissu d'impression.

7. Dispositif selon la revendication 6, caractérisé en ce qu'il comprend des manipulateurs (8) qui permettent d'envoyer aux ordinateurs subordonnés (7) des instructions pour la correction incrémentielle de la phase ou de l'angle de rotation et/ou pour l'accélération ou le freinage de différents écrans (4).

8. Dispositif selon l'une des revendications 6 ou 7, caractérisé en ce qu'il comprend un moteur à courant continu (1) pour l'entraînement du tissu d'impression, qui peut être réglé par l'intermédiaire d'un convertisseur (2) en fonction des signaux de sortie du compteur différentiel (12) et du convertisseur numérique/analogique (13).

9. Dispositif selon l'une des revendications 1 à 8, caractérisé en ce
- que chaque ordinateur subordonné (7) est suivi de deux servomoteurs (5) pouvant être commandés par l'intermédiaire de circuits d'attaque de puissance (6) associés, pour l'entraînement individuel bidirectionnel des écrans (4), et
- que respectivement l'un des deux servomoteurs (5) de chaque écran (4) est relié à un manipulateur (8') pour permettre, au choix, l'interruption de l'alimentation de courant.
